# EUROPEAN PATENT SPECIFICATION

(11) **EP 2 339 198 B1**
(45) Date of publication and mention of the grant of the patent: **12.09.2012**
(21) Application number: 10196918.6
(22) Date of filing: 23.12.2010
(51) Int. Cl.: F16D 65/14

(54) **Caliper for a brake of a vehicle**
Bremssattel für ein Fahrzeug
Etrier pour un véhicule

(30) Priority: 24.12.2009 IT MI20092303
(43) Date of publication of application: 29.06.2011
(73) Proprietor: Freni Brembo S.p.A., 24035 Curno (IT); Politecnico di Milano, 20133 Milano (IT)
(72) Inventor: Cantoni, Carlo, I-24020, Gorle, BERGAMO (IT); Arrigoni, Riccardo, I-26027, Rivolta d'Adda, CREMONA (IT); Mastinu, Gianpiero, I-22012, Cernobbio, COMO (IT); Gobbi, Massimiliano, I-27100, PAVIA (IT); Guarneri, Paolo, I-26011, Casalbuttano, CREMONA (IT)
(74) Representative: Crippa, Paolo Ernesto

(56) References cited:
- EP-A2- 1 669 628
- DE-A1-102006 047 210
- DE-U1- 8 900 846
- FR-A1- 2 855 574
- US-A1- 2007 137 948

## Description

### Field of the invention.

The present invention refers to a caliper for a brake of a vehicle, for example an automobile. More specifically, the invention refers to a caliper according to the preamble of the attached claim 1.

### State of the art

In a brake of a vehicle it is desirable for there to be an amplification of the force developed by suitable actuators towards the pads and that allows satisfactory clamping forces exerted by the pads on the brake disc.

According to the prior art, in order to obtain the aforementioned amplification bulky and heavy structures are used, for example using a servo brake device.

US 2007/137948 A1 relates to a bicycle mechanism including a body located above a front wheel and a pivotable member pivotably connected to the body.

### Purpose of the invention

A purpose of the present invention is to make a caliper for a vehicle equipped with a device for amplifying the force developed by the actuators towards the pads, so that the clamping force of the pads on the disc is amplified without increasing the bulk or weight of the brake. In particular, the present invention is intended to make a caliper and a brake for a vehicle that avoids the need to use a servo brake device to obtain the aforementioned amplification.

Furthermore, the present invention has the purpose of making a caliper for a vehicle having low bulk and weight, which in combination have performance good and reliable braking, and that at the same time can be made in a simple and cost-effective manner.

This and other purposes are obtained according to the present invention through a caliper of the type specified above defined by the characterising part of the attached claim 1.

Thanks to such characteristics it is possible to obtain an amplification of the clamping force of the pads on the disc with respect to the actual force exerted by the actuator associated with the respective pad. Consequently, there is no need to use the amplification devices used in brakes according to the state of the art. In this way, the size and weight of the braking system can be reduced.

More specifically, such characteristics cause such an amplification thanks to a so-called "locking" effect, the meaning and definition of which shall be made clearer in the rest of the present description. In other words, the reaction of the articulated quadrilateral mechanism and of the caliper body due to the contact of the friction material with the rotating disc causes such locking, which substantially achieves an amplification of the force developed by the actuator, pressing the brake pad further against the disc, ensuring a satisfactory clamping force.

### Brief description of the figures

Further characteristics and advantages of the present invention will become clear from the following detailed description, given purely as a non-limiting example, with reference to the attached drawings, in which:
- figure 1 is a perspective view of an example embodiment of a caliper made according to the present invention, shown without the caliper body and associated with a disc of a brake;
- figure 2 is an elevated view showing the caliper illustrated in figure 1 associated with a disc of a brake;
- figure 3 is a section view according to the line III-III of figure 2;
- figure 4 is a section view according to the line IV-IV of figure 2;
- figure 4a is a view similar to the one represented in figure 4, but showing the brake pad with the friction material in a worn condition;
- figure 5 is a view depicting a further example embodiment of the caliper according to the present invention;
- figure 6 is an exploded perspective view that partially illustrates the caliper according to the present invention; and
- figure 7 is a schematic representation that qualitatively shows the interactions between a caliper made according to the present invention and the disc of the brake with which such a caliper is associated;
- figure 8 illustrates a diagram of the variation of the amplification coefficient C according to the wear of the pad;

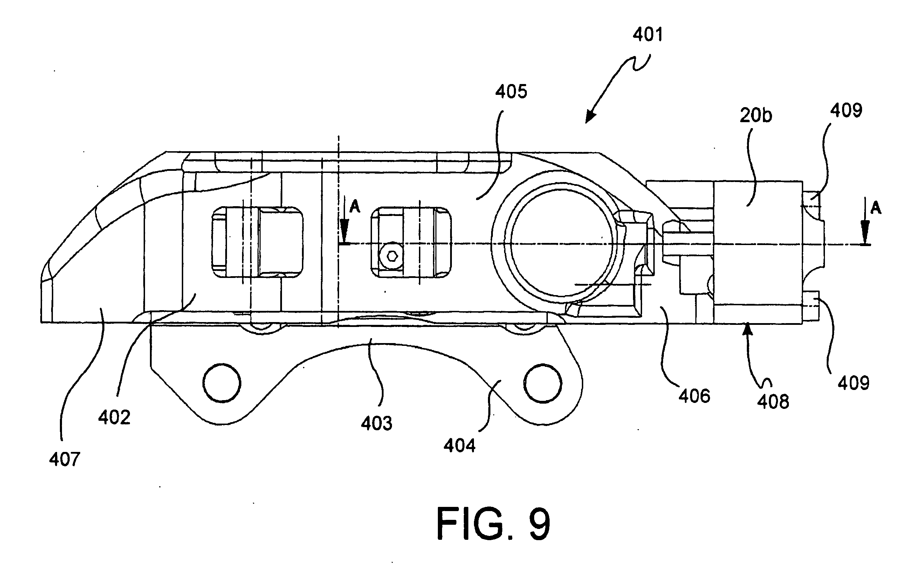

- figure 9 illustrates a side view of a caliper according to a further embodiment;

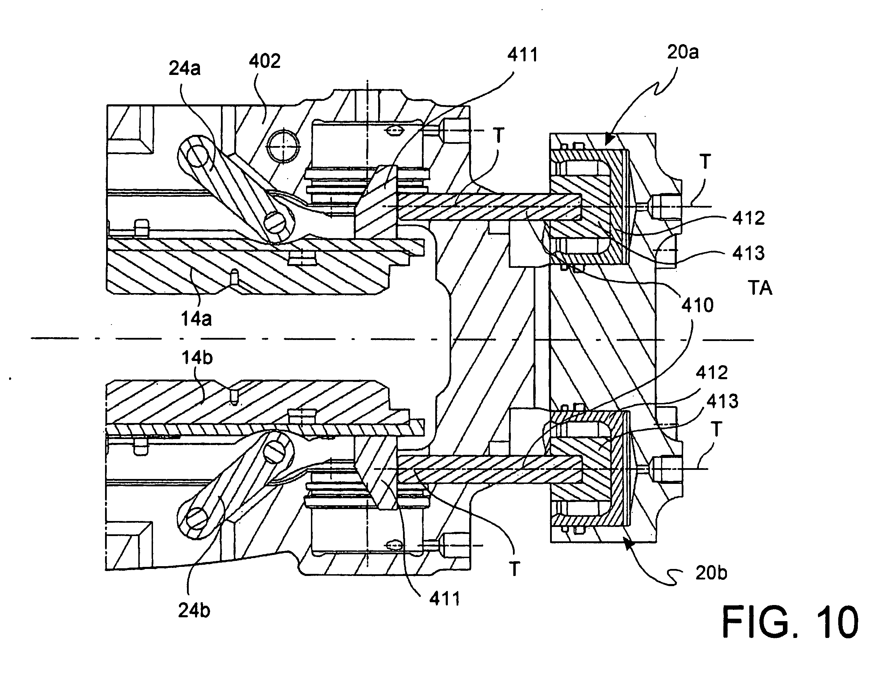

- figure 10 shows a radial view, sectioned according to the line A-A of figure 10, of a detail of the caliper of figure 9.

### Detailed description

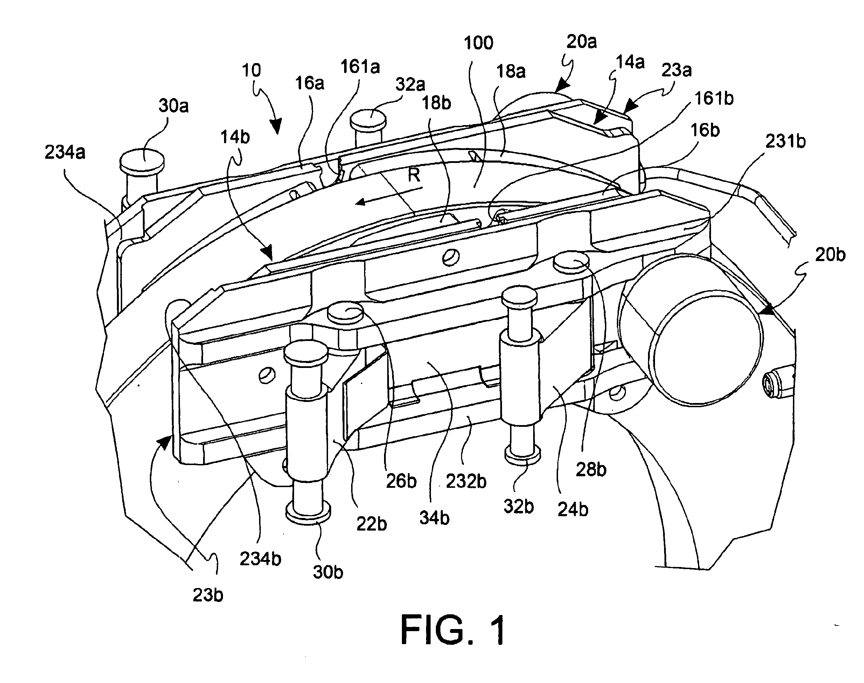

With reference in particular to figure 1, a caliper made according to the present invention and belonging to a brake is indicated with 10. Such a brake is preferably a foundation brake (or also called service brake), which is intended to be used on a vehicle (not illustrated), particularly but not exclusively on an automobile.

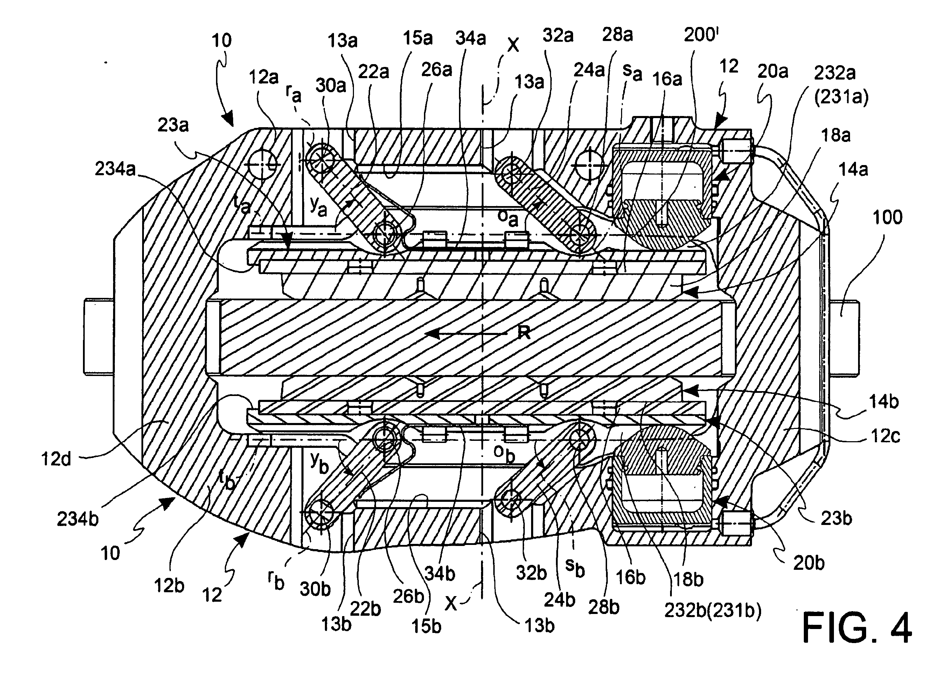

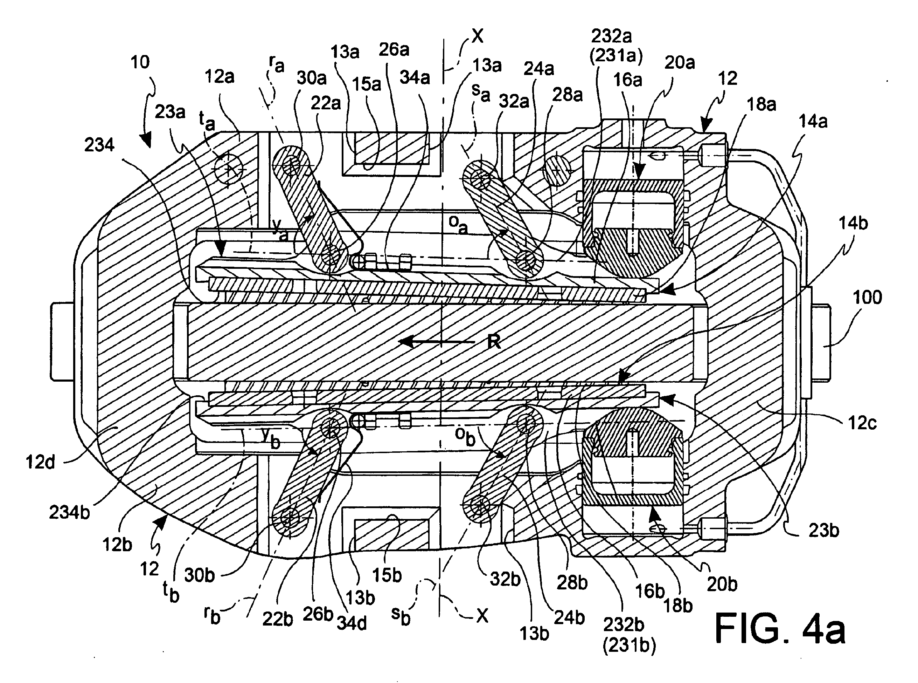

Such a disc brake comprises a disc 100 able to rotate about a rotation axis X-X (figure 4) fixedly connected to a wheel (not visible) of the vehicle, on which the brake is intended to be mounted.

By axial direction we mean a direction parallel to the rotation axis X-X of the disc 100 and of the relative wheel. By radial direction we mean a direction perpendicular to the aforementioned axial direction and passing through the rotation axis X-X of the disc 100. By tangential direction we mean a direction perpendicular to the aforementioned radial direction.

Moreover, in the present description and in the attached claims expressions such as "disc entry side" or "disc exit side" we meant to refer to the position of elements and components of the caliper 10 that are met respectively first and last by the same portion of the disc 100 when it rotates according to the direction of rotation R in the normal direction of travel of the vehicle.

Furthermore, in the present description and in the attached claims, the terms "wheel side" and "support side" refer to elements that are intended in the mounting of the caliper to be axially closer to the wheel and, respectively, to the connection region between the caliper body and the suspension of the vehicle.

In any case, the terminology adopted only has the function of defining the relationships between the elements and the components of the described embodiments, and therefore it should not be taken to limit the invention.

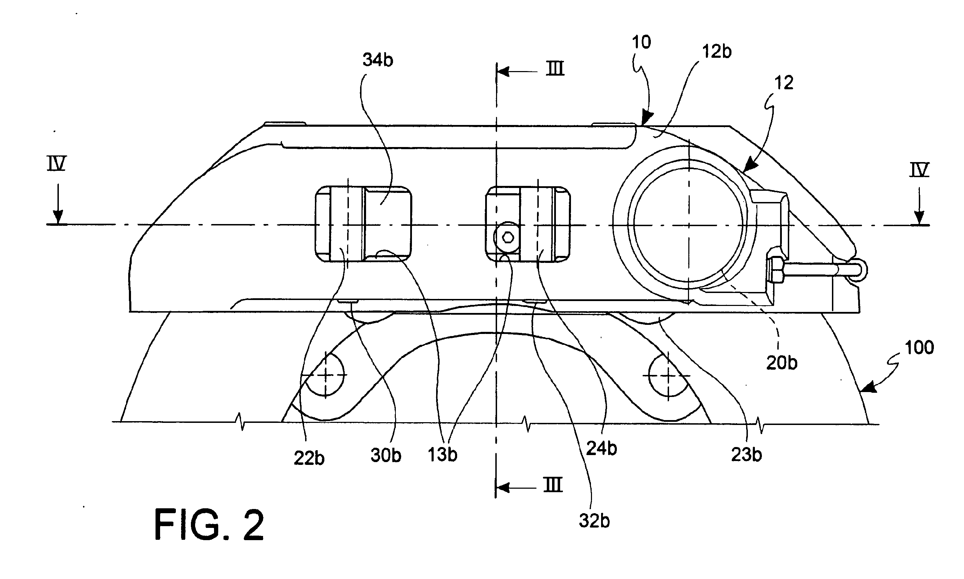

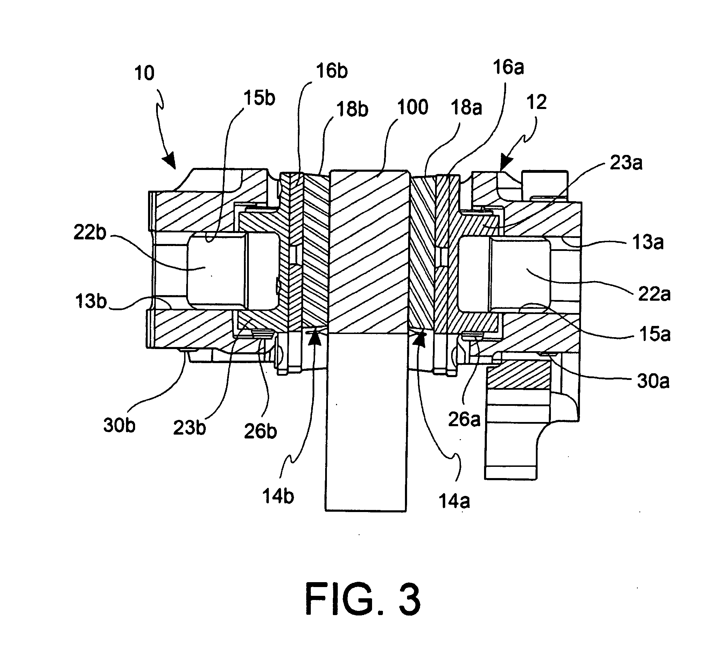

The caliper 10 is fixed to a support portion (not shown) of the vehicle and includes a caliper body 12 (not visible in figure 1, but shown in figures 2 to 5) arranged astride of the disc 100.

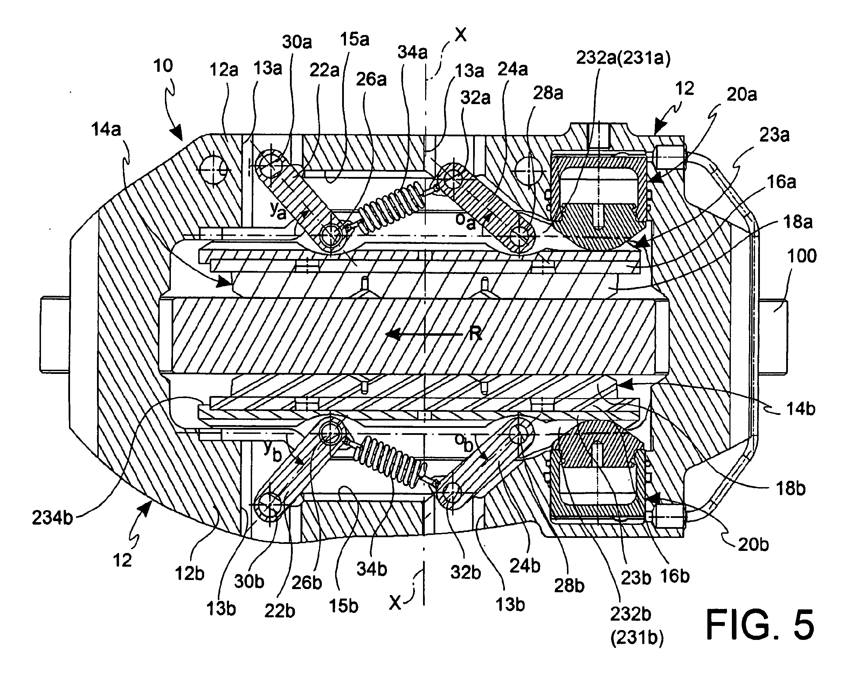

As can be seen in particular in figures 4 and 5, optionally the caliper body 12 substantially defines a closed annular shape that has a first portion 12a located on the support side and a second portion 12b located on the wheel side. The first portion 12a and the second portion 12b are thus located in axially opposite positions with respect to the disc 100. Moreover, the first and second portion 12a and 12b have a mainly longitudinal extension according to a tangential direction.

Moreover, the closed annular shape of the caliper body 12 has a first joint section 12c located on the disc entry side and a second joint section 12d located on the disc exit side. The first joint section 12c and the second joint section 12d interconnect the respective ends of the first portion 12a and of the second portion 12b.

Preferably, the portions 12a and 12b internally have a respective first and second pair of windows 13a, 13b oriented mainly according to an axial direction facing towards the disc 100. The first and second pair of windows 13a and 13b respectively open into a first and second cavity 15a and 15b obtained in the first and second portion 12a and 12b. The combination of the first pair of windows 13a and of the first cavity 15a overall defines a first hollow region passing in the first portion 12a. Similarly, the second pair of windows 13b and the second cavity 15b of the second portion 12b define a second hollow region.

Moreover, the caliper 10 comprises a first pad 14a located on the support side and a second pad 14b located on the wheel side. The first pad 14a and the second pad 14b are mounted on the caliper body 12 at its first and second portion 12a and 12b.

The first and second pad 14a, 14b in a *per sé* known way respectively include a first and a second support plate 16a, 16b. The first and second pad 14a, 14b respectively comprise a first and second friction coating 18a, 18b located on the faces belonging to the respective support plates 16a, 16b and facing towards the disc 100. As can be seen in figure 1, the first and second support plate 16a, 16b in their perimeter portion respectively have a first and second recess 161a, 161b both shaped like a U radially open towards the outside of the respective plates 16a, 16b. Such recesses 161a, 161b are used to house a wear indicator device of the *per sé* known type (not illustrated).

Furthermore, the caliper 10 comprises a first actuator 20a supported by the caliper body 12 on the support side and intended to exert a force oriented according to an axial direction towards the disc 100. In a preferable manner, the caliper 10 also includes a second actuator 20b supported by the caliper body 12 on the wheel side and in turn intended to exert a force oriented according to an axial direction towards the disc 100. In a possible embodiment, the first and second actuator 20a, 20b are hydraulic actuator cylinders. In any case, it is clear to the man skilled in the art that it is possible to alternatively use different types of mechanical actuators and/or electromechanical devices capable of exerting forces oriented as specified above. For example, it is possible to use a mechanical actuator controlled through an electric motor. An example is described in application WO2009/016660.

Advantageously, the first and second actuator 20a, 20b are located on the disc entry side of the caliper body 12.

In this arrangement, when the first and second actuator 20a, 20b are actuated from a rest condition towards a working condition, the first and second pad 14a, 14b approach one another resting at the opposite axial surfaces of the disc 100 and thus exerting a clamping force of desired intensity.

As will now be described, between the caliper body 12 and the first pad 14a there is a first articulated quadrilateral mechanism located on the support side. Preferably but not necessarily, between the caliper body 12 and the second pad 14b there is also a second articulated quadrilateral mechanism in turn located on the wheel side.

Only the first articulated quadrilateral mechanism will be illustrated now, since the second articulated quadrilateral mechanism is advantageously identical and mirrors the first articulated quadrilateral mechanism with respect to the plane in which the disc 100 rotates. Consequently, the direction of the second articulated quadrilateral mechanism will be omitted for the sake of concision. Moreover, for the same reasons, the alphanumerical references that will be used hereafter to describe the components of the first articulated quadrilateral mechanism, will be used in the drawings but ending with the letter "b" instead of with the letter "a".

The first articulated quadrilateral mechanism comprises a first shaft 22a (outlet shaft) located on the disc exit side, and a second shaft 24a (inlet shaft) located on the disc entry side.

With reference in particular to figures 1, 3, 4 and 6, advantageously the first articulated quadrilateral mechanism also comprises a connecting rod body 23a. Such a connecting rod body 23a acts as a rest for the support plate 16a for transmitting the braking force. Preferably, the connecting rod body 23a is shaped substantially like a plate and comprises a first and a second rib 231a and 232a projecting from its face facing towards the caliper body 12 and parallel to one another. Optionally, the disc entry side and disc exit side ends of such ribs 231a and 232a project less and are tapered with respect to their middle portion according to an axial direction. Moreover, it can be noted that the connecting rod body 23a, on its axially inner face (in other words facing towards the disc 100 according to an axial direction) has a end projection 234a located on the disc exit side. Advantageously, the end projection 234a makes an abutment surface against which the support plate 16a can press while the pad 14a is moved, which occurs during braking operations. Preferably, the first actuator 20a presses on the connecting rod body 23a in a position situated at the axially outer face (in other words, facing the opposite way with respect to the disc according to an axial direction) and near to the disc entry side end.

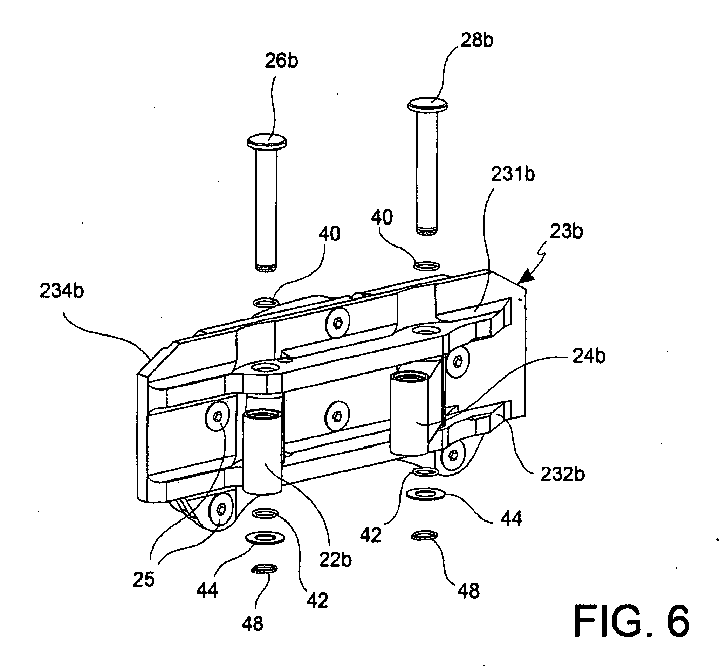

As can be seen in the exploded partial view shown in figure 6, it can be appreciated that the connecting rod body 23a is fixed to the respective support pad 16a through suitable attachment elements, such as screws 25.

At one end, the first shaft 22a and respectively the second shaft 24a are hinged to the connecting rod body 23a thanks to a first pin 26a and respectively thanks to a second pin 28a. At the other end, the first shaft 22a and respectively the second shaft 24a are hinged to the caliper body 12 thanks to a third pin 30a and respectively thanks to a fourth pin 32a. According to an axial direction, the first and second pin 26a and 28a are located in a position closer to the disc 100, whereas the third and fourth pin 30a and 32a are located in a position farther from the disc 100.

Preferably, the first and second pin 26a and 28a are supported in rotation in the respective most projecting middle portions of the ribs 231a, 232a according to an axial direction. Also in a preferred manner, the third and fourth pin 30a and 32a are supported in rotation by the caliper body respectively near to each of the windows 13a of the portion 12a.

Consequently, the shafts 22a and 24a are able to rotate around the respective pins 26a, 30a and 28a, 32a.

As shown in the illustrated embodiment, the pins 26a, 28a, 30a, 32a are oriented parallel to a radial direction and are parallel to one another.

With reference to the exploded view shown in figure 6, it is possible to see a preferred way of mounting the pins 26b and 28b on the second connecting rod body 23b. In any case, the other pins 26a, 28a, 30a, 30b, 32a and 32b can also replicate the same way of mounting shown in figure 6 for the pins 26b and 28b. In the illustrated embodiment, the pins 26b and 28b advantageously have a respective widened head and around each of them there is a first sealing ring 40 located near to the widened head of the respective pin and a second sealing ring 42 located in the vicinity of the bottom end, opposite the head, of the respective pin. Below each of the second sealing rings 42 a respective washer 44 is mounted, locked at the bottom through an elastic ring 48 of the "Seeger" type applied at the bottom end of the associated pin.

In light of the above, the ribs 231a and 232a firstly allow the structure of the connecting rod body 23a to be stiffened, preventing the stresses to which it is subjected being able to cause deformations thereof. Furthermore, the presence of the ribs 231a and 232b allows simplified mounting of the pins 26a, 26b and 28a, 28b on the respective connecting rod bodies 23a and 23b.

Consequently, the first articulated quadrilateral mechanism is defined by:
- the caliper body 12 that, through the support side portion 12a, acts as a bridge or frame;
- the connecting rod body 23a associated with the first pad 14a; and
- the shafts 22a, 24a that interconnect the caliper body 12 and the connecting rod body 23a and that carry out the function of a first and a second connecting rod (with reference to the fact that in the specific embodiment the structure of the pad prevents a complete rotation thereof).

Preferably, the distance between the axes of the first and second pin 26a and 28a is between about 40mm and 80mm.

Advantageously, the lengths of the shafts 22a, 24a are between about 20mm and 50mm.

As can be seen in figure 4, ya indicates a first angle of inclination (or also called "disc exit side angle of inclination" that the first shaft 22a has in relation to the first connecting rod body 23a) between a first line rₐ parallel to the first shaft 22a and a reference line tₐ parallel to the connecting rod body 23a. In other words, the first line rₐ is a line perpendicular to both of the rotation axes defined by the first pin 26a and by the third pin 30a. On the other hand, the reference line tₐ is a line perpendicular to both of the rotation axes defined by the first pin 26a and by the second pin 28a. Similarly, Oa indicates a second angle of inclination (or also called "disc entry side angle of inclination" that the second shaft 24a has in relation to the first connecting rod body 23a) between a second line sₐ parallel to the second shaft 24a and the reference line tₐ defined earlier. In other words, the second line sₐ is a line perpendicular to both of the rotation axes defined by the second pin 28a and by the fourth pin 32a.

Preferably, the first angle of inclination ya and the second angle of inclination Oa are both acute angles.

The extension of the first angle of inclination ya is to be measured considering the angular region between:
- a section belonging to the reference line tₐ, having its origin at the rotation axis defined by the first pin 26a, and extending towards the disc exit side; and
- a section belonging to the first line rₐ and having its origin at the rotation axis defined by the first pin 26a and extending towards the rotation axis defined by the third pin 30a.

Similarly, the extension of the second angle of inclination Oa is to be measured considering the angular region between:
- a section belonging to the reference line tₐ, having its origin at the rotation axis defined by the second pin 28a, and extending towards the disc exit side; and
- a section belonging to the second line sₐ having its origin at the rotation axis defined by the second pin 28a and extending towards the rotation axis defined by the fourth pin 32a.

In a further preferred manner, the first angle of inclination ya is greater than the second angle of inclination Oa.

Advantageously, the first angle of inclination ya is between about 20° and 50°. The difference between the first angle of inclination ya and the second angle of inclination Oa is preferably between about 0° and 10°. It should be noted that the first angle of inclination ya and the second angle of inclination Oa vary during the operation of the caliper 10 according to the wear of the friction material 18a associated with the first pad 14a. Regarding this, it can be appreciated that in figure 4a the caliper 10 is depicted with the friction material 18a in a worn condition. In such a condition it is possible to see that the angles of inclination ya, Oa shown in figure 4 ("new" pads) are smaller than those represented in figure 4a. Thus, as the pad 14a wears down, the aforementioned angles of inclination increase with respect to their value in the condition with the pad "new", with friction material not worn. A similar thing happens for the other pad 14b.

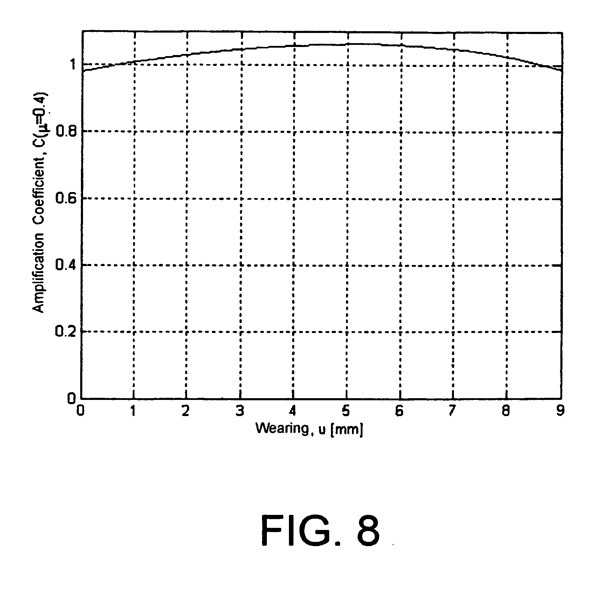

In accordance with a possible embodiment, the first actuator 20a, at the contact area with the respective pad, has a convex portion 20a' that makes it possible to move the point of application of the force applied by the actuator on the pad according to the wear of the pad itself. In particular, such movement takes place considering that the pad substantially rotates around an axis perpendicular to an axis perpendicular to the rotation axis of the disc in passing from the new pad condition to the worn pad condition. As an effect of such a movement, the amplification coefficient due to the presence of the articulated quadrilateral stays substantially constant and thus repeatable at every time of braking as for example illustrated in the diagram of figure 8. A similar thing happens for the second actuator.

Advantageously, in order to make it easier for the first pad 14° to return to the rest condition, the caliper 10 also comprises a first elastic return element tending to hold the first articulated quadrilateral mechanism in the rest configuration.

With reference in particular to figures 1 and 4, the first elastic return element preferably comprises a flat spring 34a. Such a flat spring 34a is fixed onto the face of the connecting rod body 23a facing the opposite way to the disc 100 according to an axial direction and presses on the first shaft 22a. Such a first elastic element tends to pull the first articulated quadrilateral mechanism towards the rest configuration. The flat spring 34a - suitably preloaded - acts between the connecting rod body 23a and the first shaft 22a with an intensity such as to allow it to return into the rest configuration.

In the variant illustrated in figure 5, it is possible to see that for the first elastic return element a helical traction spring has, on the other hand, been used, which is again indicated with the reference numeral 34a and that is arranged between the first shaft 22a and the second shaft 24a. More specifically, the helical traction spring 34a presses on portions of the shafts 22a and 24a that are respectively brought close to the first pin 26a and to the fourth pin 32a. The traction spring 34a - suitably preloaded - acts between the first shaft 22a at the first pin 26a and the second shaft 24a at the fourth pin 32a with an intensity such as to allow it to return into the rest configuration. A similar thing happens for the other pad.

We shall now clarify the operation of the caliper 10 according to the embodiments illustrated as examples in figures 1 to 6.

When the actuators 20a and 20b are in a rest condition and the caliper 10 is in a rest configuration, the first and second elastic return element 34a, 34b bias the respective articulated quadrilateral mechanisms, tending to hold them in the respective rest configurations.

When the actuators 20a and 20b are actuated towards their working condition they push the respective connecting rod bodies 23a, 23b and the respective pads 14a, 14b exerting a clamping force against the disc 100. The friction force developed by the clamping force tends to pull the brake pads 14a, 14b the same way as the direction of rotation R. The brake pads 14a, 14b rest against the associated end projections 234a, 234b and consequently in turn pull the connecting rod bodies 23a and 23b according to a roto-translation movement. The pulling of the connecting rod bodies 23a and 23b causes an oscillation of the shafts 22a, 22b, 24a and 24b against the action of the elastic return elements 34a, 34b. The oscillation of the shafts 22a, 22b, 24a and 24b takes place according to a direction tending to increase the size of the respective angles of inclination ya, yb and Oa, Ob, and that thus tends to bring the pads 14a, 14b closer against the disc.

Thanks to this effect, a wedging of the pads 14a and 14b is generated between the articulated quadrilaterals and the disc 100, causing a so-called "locking" phenomenon between the disc 100 and the pads 14a, 14b. The shafts 22a, 22b, 24a and 24b indeed behave like "sprags" that undergo a compression load due to the pull that the disc 100 exerts on the pads 14a, 14b and to the reaction of the caliper body 12 when a braking action occurs. The compression load is generated in the shafts 22a, 22b, 24a, 24b between the respective pins 26a, 28a, 30a, 32a, 26b, 28b, 30b, 32b. Therefore, for the same force Fₐₜₜ. exerted by the actuators 20a and 20b, the clamping force is therefore amplified due to the reaction that such shafts 22a, 22b, 24a and 24b oppose to such a compression load. In other words, a force Fₐₘₚ. is generated due to the "axial" component (in other words, directed according to an axial direction) of such a reaction of the shafts 22a, 22b, 24a, 24b. The force F_{amp.} due to the "axial" component of the reaction of the shafts tends to press the pads 14a and 14b further against the disc 100 and in this way the braking force also increases.

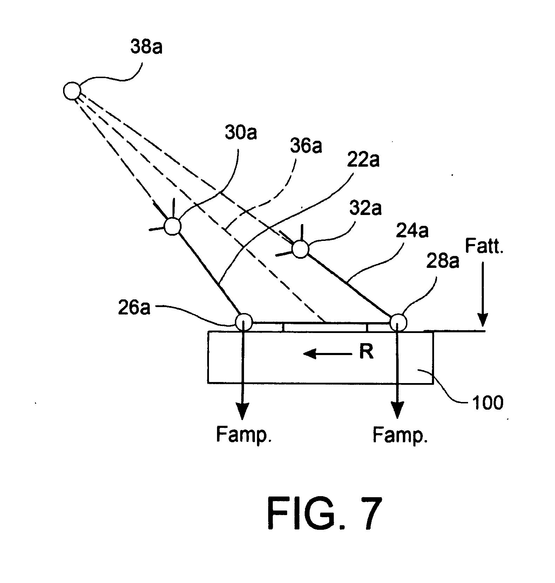

With reference to figure 7, it is made clear that fundamentally the effect of the articulated quadrilateral mechanism translates into the effect of a single resulting shaft 36a "virtually" hinged at a hinging point 38a outside of the articulated quadrilateral mechanism. Such a hinging point 38a is moved away according to an axial direction with respect to the articulated quadrilateral mechanism and lies in the point of intersection between the two lines rₐ and sₐ passing through the first shaft 22a and respectively through the second shaft 24a (see previous definition). However, the resulting shaft 36a would have a substantially longer longitudinal extension than each of the shafts 22a, 24a, disadvantageously increasing the bulk of the caliper 10. Furthermore, the presence of an articulated quadrilateral mechanism makes it easier to control the position and the movement of the associated pad, with respect to the use of a single shaft 36a. Indeed, the articulated quadrilateral mechanism sets a controlled and regular wear of the friction material associated with the brake pad, if the performance is compared with the use of a single shaft 36a.

When the actuators 20a and 20b are deactivated, the pads 14a, 14b are free to detach from the disc 100 in a way helped by the action of the elastic return elements 34a, 34b that act on the first and second articulated quadrilateral mechanism to take them back into the rest configuration.

Of course, without affecting the principle of the invention, the embodiments and the details can be widely varied with respect to what has been described and illustrated purely as a non-limiting example, without for this reason departing from the scope of the invention as defined in the attached claims. For example, the connecting rod body 23a can be in one piece with the pad.

In accordance with an embodiment, said actuator means 20a, 20b are of the hydraulic and/or electromechanical type.

In accordance with an embodiment, said caliper is provided with a single actuator suitable for facing a single side of the disc and the caliper body is of the floating type.

In accordance with a general embodiment, said actuator means 20a, 20b are arranged with their thrusting axis T-T directed substantially parallel to braking surfaces of the disc, or in other words parallel to the tangential direction TA.

In accordance with an embodiment, a caliper 401 comprises a caliper body 402, having a hub side elongated portion 403 that, in accordance with an embodiment has an attachment element to the hub 404.

Said caliper body 402 has a wheel side elongated element 405, which connects to said hub side elongated element at least through a first disc entry bridge 406 and a second disc exit bridge 407, arranged astride of a brake disc.

In accordance with an embodiment, said caliper in its disc entry side has a housing 408 suitable for housing actuator means 20a, 20b.

In accordance with an embodiment, said housing 408 is in a single piece with the caliper body 402, ma, in accordance with an embodiment, said housing is in a separate body from the caliper body 402 and firmly connected to it, for example through threaded rods 409.

In accordance with an embodiment, said actuator means 20a, 20b act on said pads 14a, 14b, or a connecting rod body (23a; 23b) fixedly connected to said pad (14a; 14b), through a pin 410. In accordance with an embodiment, said pin acts according to a tangential direction T-T.

In accordance with an embodiment, said pin 410 acts against a protuberance 411 fixed or in one piece with the pad 14a, 14b, or a connecting rod body (23a; 23b) fixedly connected to said pad (14a; 14b).

In accordance with an embodiment, said actuator means 20a, 20b are electromechanical means.

In accordance with an embodiment, said actuator means 20a, 20b are hydraulic means that comprise cylinder-piston groups 412 that act on cups 413 connected to said pins 410.

## Claims

1. Caliper (10) for a brake of a vehicle, comprising:
- a caliper body (12) intended to be mounted astride of a disc (100) able to rotate about a rotation axis (X-X);
- a first and a second pad (14a, 14b) supported by the caliper body (12) on opposite side with respect to the disc (100), and respectively having a first and second coating of friction material (18a, 18b) facing one another;
wherein
at least one of said pads (14a; 14b) is mounted on the caliper body (12) through a respective mechanism suitable for generating a wedging of at least one pad (14a; 14b) between said mechanism and the disc (100), causing a locking between the disc (100) and the at least one pad (14a; 14b),
at least one of said pads (14a; 14b) is mounted onto the caliper body (12) through a respective articulated quadrilateral mechanism (12a, 22a, 23a, 24a; 12b, 22b, 23b, 24b);
said articulated quadrilateral mechanism comprises a connecting rod body (23a; 23b) fixedly connected to said pad (14a; 14b) and a pair of shafts (22a, 24a; 22b, 24b); each of said shafts (22a, 24a; 22b, 24b) having a respective hinging point (30a, 32a; 30b, 32b) fixedly connected to the caliper body (12) and a respective hinging point (26a, 28a; 26b, 28b) fixedly connected to said connecting rod body (23a; 23b);
said pair of shafts (22a, 24a; 22b, 24b) comprises an outlet shaft (22a; 22b) located on the disc exit side and an inlet shaft (24a; 24b) located on the disc entry side;
**characterised in that**
said pair of shafts (22a, 22b; 24a, 24b) comprises an outlet shaft (22a, 22b) forming a first angle of inclination (ya; yb) acute with respect to the connecting rod body (23a; 23b) passing from the disc exit side - in a direction parallel to the disc
- to the axis of said shafts, said pair of shafts (22a, 22b; 24a, 24b) comprising an inlet shaft forming a second angle of inclination (0a; 0b) acute with respect to the connecting rod body (23a; 23b) passing from the disc exit side - in a direction parallel to the disc - to the axis of said shafts, said first angle of inclination (ya; yb) and said second angle of inclination being different with one another so as to have said first pair of shafts (22a, 22b) and said second pair of shafts (24a, 24b) converging with one another.

2. Caliper according to claim 1, wherein actuator means (20a, 20b) are supported by the caliper body (12) and are suitable for causing the displacement of at least one of said pads (14a, 14b) up against the disc (100).

3. Caliper according to claim 1 or 2, wherein the first angle of inclination (ya; yb) is greater than the second angle of inclination (0a; 0b).

4. Caliper according to claim 3, wherein the actuator means (20a; 20b) are arranged to act at the disc entry side, crossing the caliper body in the direction of rotation of the disc, acting upstream or before the shafts (22a, 24a; 22b, 24b).

5. Caliper according to claim 4, wherein said hinging points (26a, 28a; 26b, 28b, 30a, 32a; 30b, 32b) define respective rotation axes oriented according to respective directions parallel to a radial direction.

6. Caliper according to any one of claims 4 or 5, wherein the distance between said hinging points (26a, 28a; 26b, 28b) fixedly connected to the connecting rod body is between about 40mm and 80mm.

7. Caliper according to any one of claims 4 to 6, wherein said shafts (22a, 22b; 24a, 24b) are completely contained inside the caliper body, and/or inside the hub side and wheel side elongated elements avoiding entering the bulk of the disc exit and entry end bridges, and/or, evaluating the caliper in the axial direction, remaining substantially within the bulk of the pads.

8. Caliper according to claim 7, wherein the first angle of inclination (ya; yb) is between about 20° and 50° and/or wherein the difference between the first angle of inclination (ya; yb) and the second angle of inclination (Oa; Ob) is between about 0° and 10°.

9. Caliper according to any one of claims 4 to 8, wherein the disc outlet shaft (22a, 22b) and/or the disc inlet shaft (24a, 24b) has/have a respective length of between about 20mm and 50 mm.

10. Caliper according to any one of claims 1 to 9, also comprising at least one elastic return element (34a; 34b) acting on the articulated quadrilateral mechanism (12a, 22a, 23a, 24a; 12b, 22b, 23b, 24b) and tending to take said at least one pad (14a; 14b) away from the disc (100), wherein for example said at least one elastic return element (34a; 34b) acts on one (22a; 22b) of the shafts (22a, 24a; 22b, 24b) tending to take back in the respective rest configuration, or wherein said at least one elastic return element (34a, 34b) is arranged between the connecting rod body (23a; 23b) and the respective shaft (22a, 22b), or wherein said at least one elastic return element (34a, 34b) is arranged between the respective shafts (22a, 24a; 22b, 24b) of the associated articulated quadrilateral mechanism (12a, 22a, 23a, 24a; 12b, 22b, 23b, 24b).

11. Caliper according to any one of claims 2 to 10, wherein the actuator means (20a; 20b) are arranged to act on the connecting rod body (23a; 23b).

12. Caliper according to any one of the previous claims, wherein the first and second pad (14a, 14b) are mounted on the caliper body (12) through a respective first and second articulated quadrilateral mechanism (12, 14a, 22a, 24a; 12, 14b, 22b, 24b), preferably in which the first and second articulated quadrilateral mechanism (12, 14a, 22a, 24a; 12, 14b, 22b, 24b) are identical to one another.

13. Caliper according to claim 12, wherein the first and second articulated quadrilateral mechanism (12, 14a, 22a, 24a; 12, 14b, 22b, 24b) are located in positions respectively mirroring one another with respect to the plane of rotation of the disc (100).

14. Caliper according to one or more of the previous claims, wherein said actuator means (20a, 20b) are of the hydraulic and/or electromechanical type or else in which said caliper is provided with a single actuator and is of the floating type.

15. Caliper according to one or more of claims 2 to 14, wherein said actuator means (20a, 20b) are arranged with their thrusting axes directed substantially parallel to braking surfaces of the disc.

16. Caliper according to one or more of claim 2 to 15, wherein said actuator means (20a, 20b) are arranged with their thrusting axes directed substantially parallel to the rotation axis of the disc.

## Patentansprüche

1. Bremssattel (10) für eine Fahrzeugbremse, umfassend:
- einen Bremssattelkörper (12), welcher dazu vorgesehen ist, rittlings auf einer Scheibe (100) montiert zu werden, welche in der Lage ist, um eine Rotationsachse (X-X) zu rotieren;
- einen ersten und einen zweiten Belag (14a, 14b), welche von dem Bremssattelkörper (12) an bezüglich der Scheibe (100) gegenüberliegenden Seiten getragen sind und eine erste bzw. eine zweite Reibmaterialbeschichtung (18a, 18b) aufweisen, welche einander zugewandt sind;
wobei
wenigstens einer der Beläge (14a; 14b) an dem Bremssattelkörper (12) durch einen jeweiligen Mechanismus montiert ist, welcher dazu geeignet ist, eine Verkeilung wenigstens einer der Beläge (14a; 14b) zwischen dem Mechanismus und der Scheibe (100) zu erzeugen, wodurch eine Verriegelung zwischen der Scheibe (100) und dem wenigstens einen Belag (14a; 14b) verursacht wird,
wenigstens einer der Beläge (14a; 14b) an dem Bremssattelkörper (12) durch einen jeweiligen gelenkigen viereckigen Mechanismus (12a, 22a, 23a, 24a; 12b, 22b, 23b, 24b) montiert ist;
der gelenkige viereckige Mechanismus einen Verbindungsstangenkörper (23a; 23b) umfasst, welcher fest mit dem Belag (14a; 14b) und einem Wellenpaar (22a, 24a; 22b, 24b) verbunden ist; wobei jede der Wellen (22a, 24a; 22b, 24b) einen jeweiligen fest mit dem Bremssattelkörper (12) verbundenen Gelenkpunkt (30a, 32a; 30b, 32b) und einen jeweiligen fest mit dem Verbindungsstangenkörper (23a; 23b) verbundenen Gelenkpunkt (26a, 28a; 26b, 28b) aufweist;
das Wellenpaar (22a, 24a; 22b, 24b) eine an der Scheibenausgangsseite befindliche Ausgangswelle (22a; 22b) und eine an der Scheibeneingangsseite befindliche Eingangswelle (24a; 24b) umfasst;
**dadurch gekennzeichnet, dass**
das Wellenpaar (22a, 22b; 24a, 24b) eine Ausgangswelle (22a, 22b) umfasst, welche einen ersten Neigungswinkel (ya; yb) bildet, welcher in Bezug zu dem Verbindungsstangenkörper (23a; 23b), welcher von der Scheibenausgangsseite - in einer zu der Scheibe parallelen Richtung - zu den Achsen der Wellen verläuft, spitz ist, wobei das Wellenpaar (22a, 22b; 24a, 24b) eine Eingangswelle umfasst, welche einen zweiten Neigungswinkel (Oa; Ob) bildet, welcher in Bezug zu dem Verbindungsstangenkörper (23a; 23b), welcher von der Scheibenausgangsseite - in einer zu der Scheibe parallelen Richtung - zu den Achsen der Wellen verläuft, spitz ist, wobei der erste Neigungswinkel (ya; yb) und der zweite Neigungswinkel verschieden voneinander sind, so dass sich das erste Wellenpaar (22a, 22b) und das zweite Wellenpaar (24a, 24b) einander nähern.

2. Bremssattel nach Anspruch 1, wobei Aktuatormittel (20a, 20b) von dem Bremssattelkörper (12) getragen und dazu geeignet sind, die Verlagerung wenigstens eines der Beläge (14a, 14b) gegen die Scheibe (100) zu bewirken.

3. Bremssattel nach Anspruch 1 oder 2, wobei der erste Neigungswinkel (ya; yb) größer als der zweite Neigungswinkel (Oa; Ob) ist.

4. Bremssattel nach Anspruch 3, wobei die Aktuatormittel (20a; 20b) dazu eingerichtet sind, an der Eingangsseite der Scheibe zu wirken, welche den Bremssattelkörper in der Scheibenrotationsrichtung kreuzt, wobei sie stromaufwärts der oder vor den Wellen (22a, 24a; 22b, 24b) wirken.

5. Bremssattel nach Anspruch 4, wobei die Gelenkpunkte (26a, 28a; 26b, 28b, 30a, 32a; 30b, 32b) jeweilige Rotationsachsen definieren, welche gemäß jeweiligen Richtungen orientiert sind, welche parallel zu einer radialen Richtung sind.

6. Bremssattel nach einem der Ansprüche 4 oder 5, wobei der Abstand zwischen den Gelenkpunkten (26a, 28a; 26b, 28b), welche fest mit dem Verbindungsstangenkörper verbunden sind, zwischen ungefähr 40mm und 80mm beträgt.

7. Bremssattel nach einem der Ansprüche 4 bis 6, wobei die Wellen (22a, 22b; 24a, 24b) vollständig innerhalb des Bremssattelkörpers enthalten sind oder/und innerhalb der länglichen Nabenseiten- und Radseitenelemente, wodurch ein Eindringen in den Hauptbereich der Scheibenausgangs- und - eingangsendbrücken verhindert wird oder/und wodurch der Bremssattel in der axialen Richtung bestimmt wird, so dass er im Wesentlichen innerhalb des Hauptbereichs der Beläge verbleibt.

8. Bremssattel nach Anspruch 7, wobei der erste Neigungswinkel (ya; yb) zwischen ungefähr 20° und 50° liegt oder/und wobei die Differenz zwischen dem ersten Neigungswinkel (ya; yb) und dem zweiten Neigungswinkel (Oa; Ob) zwischen ungefähr 0° und 10° liegt.

9. Bremssattel nach einem der Ansprüche 4 bis 8, wobei die Scheibenausgangswelle (22a, 22b) oder/und die Scheibeneingangswelle (24a, 24b) eine jeweilige Länge von zwischen ungefähr 22mm und 50mm aufweist/aufweisen.

10. Bremssattel nach einem der Ansprüche 1 bis 9, auch umfassend wenigstens ein elastisches Rückstellelement (34a; 34b), welches auf den gelenkigen viereckigen Mechanismus (12a, 22a, 23a, 24a; 12b, 22b, 23b, 24b) einwirkt und dazu strebt, den wenigstens einen Belag (14a; 14b) von der Scheibe (100) wegzubringen, wobei beispielsweise das wenigstens eine elastische Rückstellelement (34a; 34b) auf eine (22a; 22b) der Wellen (22a, 24a; 22b, 24b) einwirkt, wobei es dazu strebt, sie in die jeweilige Ruhekonfiguration zurückzubringen oder wobei das wenigstens eine elastische Rückstellelement (34a, 34b) zwischen dem Verbindungsstangenkörper (23a; 23b) und der jeweiligen Welle (22a, 22b) angeordnet ist oder wobei das wenigstens eine elastische Rückstellelement (34a, 34b) zwischen den jeweiligen Wellen (22a, 24a; 22b, 24b) des zugeordneten gelenkigen viereckigen Mechanismus (12a, 22a, 23a, 24a; 12b, 22b, 23b, 24b) angeordnet ist.

11. Bremssattel nach einem der Ansprüche 2 bis 10, wobei die Aktuatormittel (20a; 20b) dazu eingerichtet sind, auf den Verbindungsstangenkörper (23a; 23b) einzuwirken.

12. Bremssattel nach einem der vorhergehenden Ansprüche, wobei der erste und der zweite Belag (14a, 14b) an dem Bremssattelkörper (12) durch einen jeweiligen ersten und einen zweiten gelenkigen viereckigen Mechanismus (12, 14a, 22a, 24a; 12, 14b, 22b, 24b) montiert sind, wobei vorzugsweise der erste und der zweite gelenkige viereckige Mechanismus (12, 14a, 22a, 24a; 12, 14b, 22b, 24b) identisch zueinander sind.

13. Bremssattel nach Anspruch 12, wobei der erste und der zweite gelenkige viereckige Mechanismus (12, 14a, 22a, 24a; 12, 14b, 22b, 24b) sich an bezüglich der Rotationsebene der Scheibe (100) jeweils gespiegelten Positionen befinden.

14. Bremssattel nach einem oder mehreren der vorhergehenden Ansprüche, wobei die Aktuatormittel (20a, 20b) von der hydraulischen oder/und elektromechanischen Art oder einer sonstigen Art sind, wobei der Bremssattel mit einem einzigen Aktuator bereitgestellt ist und von der massefreien Art ist.

15. Bremssattel nach einem oder mehreren der Ansprüche 2 bis 14, wobei die Aktuatormittel (20a, 20b) derart angeordnet sind, dass ihre Schubachsen im Wesentlichen parallel zu Bremsflächen der Scheibe gerichtet sind.

16. Bremssattel nach einem oder mehreren der Ansprüche 2 bis 15, wobei die Aktuatormittel (20a, 20b) derart angeordnet sind, dass ihre Schubachsen im Wesentlichen parallel zu der Rotationsachse der Scheibe gerichtet sind.

## Revendications

1. Etrier (10) pour un frein de véhicule, comprenant :
un corps d'étrier (12) prévu pour être monté à cheval sur un disque (100) capable de tourner autour d'un axe de rotation (X-X) ;
des première et seconde plaquettes de frein (14a, 14b) supportées par le corps d'étrier (12) sur le côté opposé par rapport au disque (100), et ayant respectivement des premier et second revêtements réalisés avec un matériau de friction (18a, 18b) se faisant face ;
dans lequel :
au moins l'une desdites plaquettes de frein (14a ; 14b) est montée sur le corps d'étrier (12) par le biais d'un mécanisme respectif approprié pour générer un coincement d'au moins une plaquette de frein (14a ; 14b) entre ledit mécanisme et le disque (100), provoquant un blocage entre le disque (100) et la au moins une plaquette de frein (14a ; 14b),
au moins l'une desdites plaquettes de frein (14a ; 14b) est montée sur le corps d'étrier (12) par le biais d'un mécanisme quadrilatère articulé (12a, 22a, 23a, 24a ; 12b, 22b, 23b, 24b) respectif ;
ledit mécanisme quadrilatère articulé comprend un corps de tige de raccordement (23a ; 23b) raccordé de manière fixe à ladite plaquette de frein (14a ; 14b) et une paire d'arbres (22a, 24a ; 22b, 24b) ; chacun desdits arbres (22a, 24a ; 22b, 24b) ayant un point d'articulation (30a, 32a ; 30b, 32b) respectif raccordé de manière fixe au corps d'étrier (12) et un point d'articulation (26a, 28a ; 26b, 28b) respectif raccordé de manière fixe audit corps de tige de raccordement (23a ; 23b) ;
ladite paire d'arbres (22a, 24a ; 22b, 24b) comprend un arbre de sortie (22a ; 22b) positionné du côté de la sortie du disque et un arbre d'entrée (24a ; 24b) positionné sur le côté d'entrée du disque ;
**caractérisé en ce que** :
ladite paire d'arbres (22a, 22b ; 24a, 24b) comprend un arbre de sortie (22a, 22b) formant un premier angle d'inclinaison (ya ; yb) aigu par rapport au corps de tige de raccordement (23a ; 23b) passant du côté de la sortie du disque - dans une direction parallèle au disque - vers l'axe desdits arbres, ladite paire d'arbres (22a, 22b ; 24a, 24b) comprenant un arbre d'entrée formant un second angle d'inclinaison (Oa ; Ob) aigu par rapport au corps de tige de raccordement (23a ; 23b) passant par le côté de sortie du disque - dans une direction parallèle au disque - jusqu'à l'axe desdits arbres, ledit premier angle d'inclinaison (ya ; yb) et ledit second angle d'inclinaison étant différents l'un de l'autre afin d'avoir ladite première paire d'arbres (22a, 22b) et ladite seconde paire d'arbres (24a, 24b) qui convergent l'une vers l'autre.

2. Etrier selon la revendication 1, dans lequel des moyens formant actionneur (20a, 20b) sont supportés par le corps d'étrier (12) et sont appropriés pour provoquer le déplacement d'au moins l'une desdites plaquettes de frein (14a, 14b) vers le haut contre le disque (100).

3. Etrier selon la revendication 1 ou 2, dans lequel le premier angle d'inclinaison (ya ; yb) est supérieur au second angle d'inclinaison (Oa ; Ob).

4. Etrier selon la revendication 3, dans lequel les moyens formant actionneur (20a ; 20b) sont agencés pour agir du côté de l'entrée de disque, traversant le corps d'étrier dans la direction de rotation du disque, agissant en amont ou avant les arbres (22a, 24a ; 22b, 24b).

5. Etrier selon la revendication 4, dans lequel lesdits points d'articulation (26a, 28a ; 26b, 28b ; 30a, 32a ; 30b, 32b) définissent des axes de rotation respectifs orientés selon des directions respectives parallèles à une direction radiale.

6. Etrier selon l'une quelconque des revendications 4 ou 5, dans lequel la distance entre les points d'articulation (26a, 28a ; 26b, 28b) raccordés de manière fixe au corps de tige de raccordement est comprise entre environ 40 mm et 80 mm.

7. Etrier selon l'une quelconque des revendications 4 à 6, dans lequel lesdits arbres (22a, 22b ; 24a, 24b) sont complètement contenus à l'intérieur du corps d'étrier, et/ou à l'intérieur des éléments allongés du côté du moyeu et du côté de la roue évitant de faire entrer l'encombrement des ponts d'extrémité de sortie et d'entrée de disque et/ou en évaluant l'étrier dans la direction axiale, restant sensiblement à l'intérieur de l'encombrement des plaquettes de frein.

8. Etrier selon la revendication 7, dans lequel le premier angle d'inclinaison (ya ; yb) est compris entre environ 20° et 50°, et/ou dans lequel la différence entre le premier angle d'inclinaison (ya ; yb) et le second angle d'inclinaison (Oa ; Ob) est comprise entre environ 0° et 10°.

9. Etrier selon l'une quelconque des revendications 4 à 8, dans lequel l'arbre de sortie de disque (22a, 22b) et/ou l'arbre d'entrée de disque (24a, 24b) a/ont une longueur respective comprise entre environ 20 mm et 50 mm.

10. Etrier selon l'une quelconque des revendications 1 à 9, comprenant également au moins un élément de rappel élastique (34a ; 34b) agissant sur le mécanisme quadrilatère articulé (12a, 22a, 23a, 24a ; 12b, 22b, 23b, 24b) et ayant tendance à éloigner ladite au moins une plaquette de frein (14a ; 14b) de disque (100), dans lequel par exemple ledit au moins un élément de rappel élastique (34a ; 34b) agit sur l'un (22a ; 22b) des arbres (22a, 24a ; 22b, 24b) ayant tendance à ramener dans la configuration de repos respective, ou dans lequel ledit au moins un élément de rappel élastique (34a, 34b) est agencé entre le corps de tige de raccordement (23a ; 23b) et l'arbre (22a, 22b) respectif, ou dans lequel ledit au moins un élément de rappel élastique (34a ; 34b) est agencé entre les arbres (22a, 24a ; 22b, 24b) respectifs du mécanisme quadrilatère articulé (12a, 22a, 23a, 24a ; 12b, 22b, 23b, 24b) associé.

11. Etrier selon l'une quelconque des revendications 2 à 10, dans lequel les moyens formant actionneur (20a ; 20b) sont agencés pour agir sur le corps de tige de raccordement (23a ; 23b).

12. Etrier selon l'une quelconque des revendications précédentes, dans lequel les première et seconde plaquettes de frein (14a, 14b) sont montées sur le corps d'étrier (12) à travers des premier et second mécanismes quadrilatères articulés (12, 14a, 22a, 24a ; 12, 14b, 22b, 24b) respectifs, de préférence dans lequel les premier et second mécanismes quadrilatères articulés (12, 14a, 22a, 24a ; 12, 14b, 22b, 24b) sont identiques.

13. Etrier selon la revendication 12, dans lequel les premier et second mécanismes quadrilatères articulés (12, 14a, 22a, 24a ; 12, 14b, 22b, 24b) sont positionnés dans des positions respectivement en miroir l'un par rapport à l'autre, par rapport au plan de rotation du disque (100).

14. Etrier selon l'une ou plusieurs des revendications précédentes, dans lequel lesdits moyens formant actionneur (20a, 20b) sont du type hydraulique et/ou électromécanique ou bien dans lequel ledit étrier est prévu avec un actionneur unique et est de type flottant.

15. Etrier selon une ou plusieurs des revendications 2 à 14, dans lequel lesdits moyens formant actionneur (20a, 20b) sont agencés avec leurs axes de poussée dirigés de manière sensiblement parallèle aux surfaces de freinage du disque.

16. Etrier selon une ou plusieurs des revendications 2 à 15, dans lequel lesdits moyens formant actionneur (20a, 20b) sont agencés avec leurs axes de poussée dirigés de manière sensiblement parallèle à l'axe de rotation du disque.
